**Europäisches Patentamt**

**European Patent Office**

**Office européen des brevets**

(19)

(11) Veröffentlichungsnummer: **0 154 891**

**B1**

(12) # EUROPÄISCHE PATENTSCHRIFT

(45) Veröffentlichungstag der Patentschrift:
**04.11.87**

(51) Int. Cl.⁴: **B 60 P 1/04**

(21) Anmeldenummer: **85102167.5**

(22) Anmeldetag: **28.02.85**

(54) **Wechselbehälter-Transport-System.**

(30) Priorität: **01.03.84 DE 3407568**

(43) Veröffentlichungstag der Anmeldung:
**18.09.85 Patentblatt 85/38**

(45) Bekanntmachung des Hinweises auf die Patenterteilung:
**04.11.87 Patentblatt 87/45**

(84) Benannte Vertragsstaaten:
**BE DE FR GB IT NL**

(56) Entgegenhaltungen:
**GB-A-763 050**
**US-A-4 058 231**

(73) Patentinhaber: **Begemann, Carl- Ludwig, Altes Dorf 7, D-3110 Westerweyhe (DE)**

(72) Erfinder: **Begemann, Carl- Ludwig, Altes Dorf 7, D-3110 Westerweyhe (DE)**

(74) Vertreter: **Eikenberg & Brümmerstedt Patentanwälte, Schackstrasse 1, D-3000 Hannover 1 (DE)**

## Beschreibung

Wechselbehälter-Transport-Systeme bestehen aus einem Fahrzeug und einem Wechselbehälter, wobei am Fahrzeug eine Vorrichtung vorgesehen ist, um den Wechselbehälter an einem gewünschten Ort abzusetzen und nach dem Beladen wieder aufzunehmen. Die Wechselbehälter sind dabei dem jeweiligen Verwendungszweck angepaßt und können als offene und geschlossene Behälter oder auch nur als Plattform ausgebildet sein.

Derartige Systeme haben den Vorteil, daß das Fahrzeug mit dem lohnintensiven Fahrer nur zum Transport der Wechselbehälter eingesetzt zu werden braucht, so daß das Fahrzeug in ständigem Einsatz bleiben kann, da der Transport vom Be- und Entladevorgang unabhängig ist und somit teure Wartezeiten entfallen.

Für die Beförderung des Wechselbehälters vom Fahrzeug auf den Boden und zurück auf das Fahrzeug sind verschiedene Systeme bekannt.

Eines dieser Systeme besteht aus einem hydraulisch ausfahrbaren Haken, der Seile oder Ketten erfaßt, die an Ösen oder Vorsprüngen angebracht werden, die seitlich am oberen Ende des Behälters vorgesehen sind. Bei diesem System ist die Größe des Behälters sowohl in der Breite als auch in der Länge begrenzt.

Ein anderes System enthält einen am hinteren Ende des Fahrzeugs um eine quer zur Fahrzeug-Längsachse verlaufende Achse schwenkbaren Auflaufrahmen, der aus einer auf der Ladefläche aufliegenden Position in eine Schräglage ausschwenkbar ist, wobei der Wechselbehälter auf den ausgeschwenkten Auflaufrahmen über zwei am Fahrzeug angebrachte Laufrollen mittels einer Zugvorrichtung aufziehbar ist, nachdem deren Zugelement mit einer Aufnahmevorrichtung am Wechselbehälter verbunden worden ist. Die Zugvorrichtung besteht dabei aus zwei über einen hydraulischen Motor angetriebenen Seiltrommeln, die am freien Ende des Auflaufrahmens montiert sind und zwei Seile aufrollen, nachdem diese mit dem auf dem Boden stehenden und beladenen Wechselbehälter verbunden worden sind. Der Wechselbehälter ist unterhalb seiner Bodenplatte mit zwei im Abstand parallel zueinander verlaufenden und an wenigstens einer der beiden Wechselbehälter-Stirnflächen nach oben abgewinkelten Längsträgern versehen, deren Abstand dem seitlichen Abstand der beiden fahrzeugseitigen Laufrollen, und deren Länge im abgewinkelten Bereich vor der Stirnfläche wenigstens dem vertikalen Abstand der Laufrollen vom Erdboden entspricht. Zur Befestigung der Stahlseile ist unterhalb des Behälters an der Seitenfläche jedes Längsträgers ein Befestigungshaken und im Abwinkelungspunkt der Längsträger zusätzlich eine Umlenkrolle angeordnet. Dieses System ermöglicht auch die Verwendung von verhältnismäßig langen Behältern.

Im Betrieb dieses bekannten Systems werden, nachdem das Fahrzeug vor den Wechselbehälter gefahren worden ist, die Stahlseile von den beiden Seiltrommeln abgewickelt und in die Befestigungshaken am Behälter eingehängt. Damit eine exakte Führung der Seile während des Aufladevorgangs sichergestellt ist, werden anschließend die Stahlseile um die Umlenkrollen am Behälter und über die Laufrollen am Fahrzeug gelegt und angespannt sowie nochmals die sichere Führung der Seile in den Umlenk- und Laufrollen kontrolliert. Nach dem Lösen der Fahrzeugbremse und dem Einschalten der Seiltrommelantriebe wird dann das Fahrzeug so weit an den Behälter herangezogen, bis die beiden Längsträger mit ihrem abgewinkelten Bereich an den Laufrollen des Fahrzeugs anliegen. Beim weiteren Aufwickeln der Stahlseile wird der Wechselbehälter an seiner Vorderseite angehoben, bis die Länngsträger mit ihrem unter dem Behälter befindlichen Bereich auf den Laufrollen aufliegen. Nach Erreichen dieser Behälter-Position wird der Auflaufrahmen des Fahrzeuges der Schräglage des Behälters angeglichen und der Behälter durch weiteres Aufwickeln der Stahlseile auf den Auflaufrahmen gezogen. Dabei nimmt die Schräglage des Behälters weiter zu, wodurch der Auflaufrahmen der veränderten Schräglage mehrmals angepaßt werden muß. Dabei wird tatsächlich nicht der Behälter auf den Auflaufrahmen, sondern das Fahrzeug weiter unter den geneigten Behälter gezogen, bis dieser vollständig auf dem Auflaufrahmen aufliegt und der Auflaufrahmen wieder auf die Ladefläche des Fahrzeugs abgesenkt werden kann.

Der Entladevorgang erfolgt entsprechend, wobei der Wechselbehälter durch seine eigene Schwerkraft selbständig von dem hochgeschwenkten Auflaufrahmen heruntergleitet und die Gleitgeschwindigkeit des Behälters dabei durch die pro Zeiteinheit abgewickelte Stahlseillänge bestimmt wird.

Nachteilig ist bei dem bekannten System, daß der Wechselbehälter an seinem vorderen Ende in jedem Fall beim Auflegen auf die Laufrollen um den vertikalen Abstand der Laufrollen vom Erdboden angehoben bzw. abgesenkt werden muß, so daß der Behälter zwangsläufig um einen großen Winkel geneigt wird. Dieser Neigungswinkel hat zur Folge, daß beim Transport von Schüttgut ein oben offener Behälter nur teilweise gefüllt werden kann, weil andernfalls das Schüttgut über die rückseitige Behälterwandung herausfällt. Außerdem führt der große Neigungswinkel bei Ladegütern jeder Art dazu, daß diese nach hinten rutschen, wodurch der Schwerpunkt des Behälters verlagert wird.

Ein weiterer Nachteil als Folge des großen Neigungswinkels besteht darin, daß der Wechselbehälter während des Aufladevorganges zunächst in Verlängerung seiner Schräglage mit seinem gesamten Gewicht nach oben auf den Auflaufrahmen gezogen werden muß, bevor er durch Absenkung des Auflaufrahmens auf die Ladefläche des Fahrzeuges aufgelegt werden kann. Dadurch wird der Schwerpunkt des Wechselbehälters und damit der resultierende Schwerpunkt der gesamten Fahrzeug-Wechselbehälter-Einheit vorübergehend weit nach oben verlegt, wodurch die seitliche Kippstabilität des Fahrzeugs in hohem Maße beeinträchtigt wird. Diese Kippstabilität des Fahrzeuges kann zwar in bekannter Weise durch am Fahrzeug installierte seitlich ausfahrbare Standfüße verbessert werden, jedoch können diese Standfüße nur bei festem Untergrund eingesetzt werden, so daß bei weichem Untergrund die Gefahr besteht, daß das Fahrzeug umkippt.

Die Erfindung geht von einem Wechselbehälter-Transport-System der zuletzt genannten Art aus, bei dem der Behälter über ein Zugelement auf einen schwenkbaren Auflaufrahmen gezogen wird. Der Erfindung liegt die Aufgabe zugrunde, bei einem solchen System den Neigungswinkel beim Aufladen und Abladen des Behälters gering zu halten und die Handhabung einfacher zu gestalten.

Die gestellte Aufgabe wird gemäß der Erfindung dadurch gelöst, daß der Wechselbehälter aus einer in sich stabilen Rahmenkonstruktion besteht, die als Traggerüst für Boden und Wände dient, und die an den Seiten des Bodens über diesen hinaus nach unten verlängert ist, wobei der seitliche Abstand der Verlängerungen so gewählt ist, daß diese bei auf dem abwärts geschwenkten Auflaufrahmen befindlichen Wechselbehälter die Fahrzeugbereifung übergreifen, daß die Aufnahmevorrichtung am Wechselbehälter stirnseitig im Bereich von dessen Mittellängsebene angeordnet und als das eine Element einer Kupplung ausgebildet ist, und daß das andere, mit dem Zugelement verbundene Kupplungselement im Auflaufrahmen in Richtung von dessen Längsachse verschieblich geführt ist.

Durch die Erfindung ergibt sich der Vorteil, daß der Behälter mit seinen Verlängerungen auf dem Erdboden ruht und damit der Boden des Behälters sich in einem Abstand entsprechend der Höhe der Verlängerungen vom Erdboden befindet. Da die Verlängerungen die Fahrzeugbereifung seitlich übergreifen, braucht der Behälter beim Aufladevorgang nur noch geringfügig angehoben zu werden, nämlich um den Abstand zwischen dem Behälterboden und dem hinteren Ende des Auflaufrahmens. Durch diese Maßnahme wird der Neigungswinkel beim Aufladen des Behälters erheblich verringert, so daß einerseits eine bessere Ausnutzung des Behälters bei Beladung mit Schüttgut möglich ist und andererseits die seitliche Kippstabilität des Fahrzeugs erhöht wird. Die Hochlegung des Behälterbodens bei auf der Erde stehendem Behälter hat ferner den Vorteil, daß die Aufnahmevorrichtung für das Zugelement in einer solchen Höhe angebracht werden kann, daß die Verbindung von Zugelement und Aufnahmevorrichtung als selbsttätig wirkende Kupplung ausgebildet werden kann, so daß das Fahrzeug lediglich an den Behälter herangefahren zu werden braucht und dann automatisch die Verbindung der Zugvorrichtung mit dem Behälter hergestellt wird.

In Ausgestaltung der Erfindung enthält die Rahmenkonstruktion vorzugsweise an ihren Ecken zwei vordere Pfosten und zwei hintere Pfosten, wobei die vorderen und die hinteren Pfosten an jeder Seite durch zwei Längsholme miteinander verbunden sind, von denen einer in Höhe des Bodens und der zweite unterhalb des Bodens angeordnet und mit dem ersten Holm durch Verbindungsstreben verbunden ist, und wobei die Längsholme durch Querholme miteinander verbunden sind.

Eine derartige Rahmenkonstruktion hat den Vorteil, daß die Behälterwände keinen Beitrag zur Stabilität des Behälters liefern müssen, so daß die Behälterwände wahlweise vom Benutzer angebracht werden können. Dadurch ist eine schnelle und bequeme Anpassung des Behälters an den gewünschten Einsatzzweck möglich. So können beispielsweise nur eine Stirnwand und eine Heckwand installiert werden, wodurch eine leichte seitliche Beladbarkeit auch für großvolumige Ladegüter erreicht wird und dabei das Ladegut in Fahrtrichtung zwischen Stirn- und Heckwand auf der Bodenplatte festgelegt ist. Werden andererseits alle vier Behälterwände montiert, kann der gleiche Behälter zum Beispiel Schüttgut aufnehmen, während bei Weglassen nur der rückwärtigen Behälterwand problemlos über die Behälterlänge hinausragende Ladegüter transportiert werden können.

Wenn die Pfosten oberhalb des Bodens mit arretierbaren Klappscharnieren versehen werden, die ein Umklappen der Pfosten in eine horizantale Lage auf dem Boden zulassen, ist eine Verwendung des Behälters als Pritsche möglich.

Die Aufnahmevorrichtung ist vorzugsweise in der Mitte am vorderen Querholm angebracht und als Fangvorrichtung für einen Haken ausgebildet, wobei der Haken das fahrzeugseitige Kupplungselement darstellt und an einem Arm sitzt, der um eine horizontale Achse schwenkbar am hinteren Ende eines Laufschlittens gelagert ist, der in den Längsträgern des Auflaufrahmens verschieblich geführt ist, und wobei das Ende des Zugelements am Haken befestigt ist.

Eine zweckmäßige Ausgestaltung sieht vor, daß der Laufschlitten zweiachsig ausgebildet ist, daß die Längsträger des Auflaufrahmens an ihrem hinteren Ende schräg nach unten abgewinkelt sind, daß die Länge des abgewinkelten Endbereichs kleiner als der Achsabstand des Laufschlittens ist, und daß der Arm aus einer Ruhestellung, in der er auf dem Laufschlitten aufliegt, in eine Betriebsstellung ausschwenkbar ist, in der der Haken bei Anordnung des Laufschlittens im abgewinkelten Endbereich der Längsträger in Höhe der Aufnahmevorrichtung eines auf dem Boden stehenden Wechselbehälters liegt.

Durch diese Konstruktion wird erreicht, daß der Haken beim Zurücksetzen des Fahrzeugs in die Aufnahmevorrichtung des Behälters gelangt, so daß es dann lediglich noch erforderlich ist, die Zugvorrichtung einzuschalten. Beim Anziehen des vorzugsweise aus einem Stahlseil bestehenden Zugelements schwenkt der Arm in seine Ruhestellung auf dem Laufschlitten zurück. Während dieser Schwenkbewegung rastet der Haken selbständig in der Aufnahmevorrichtung ein.

Die Schwenkbewegung des Armes bewirkt ein Anheben des. Wechselbehälters, wobei der Behälter je nach Anordnung der seitlichen Laufrollen entweder mit der Unterkante seiner unteren Längsholme oder direkt mit seinem Boden auf den Laufrollen liegt.

In vorteilhafter Weise ist ferner die Schwenkachse des Auflaufrahmens in zwei im Chassisrahmen des Fahrzeugs angeordneten Langlöchern geführt. Hierdurch ist es möglich, daß der gesamte Auflaufrahmen auf dem Chassisrahmen seitlich gegenüber der Fahrzeuglängsachse verschwenkbar ist. Dadurch kann auch ein Wechselbehälter, der nicht genau in Verlängerung der Fahrzeuglängsachse steht, noch problemlos auf den Auflaufrahmen aufgezogen werden.,

Durch die vollautomatische Einkupplung des Zugelements am Wechselbehälter und durch die Verwendung eines im Auflaufrahmen geführten Laufschlittens wird die praktische Handhabung erleichtert, denn es entfallen jegliche manuellen Manipulationen mit dem Zugseil, und ein Herausspringén des Zugseiles aus seiner Führung wird vermieden, so daß die Zugerlässigkeit des gesamten Wechselbehältersystems entscheidend verbessert wird.

Während des Aufladens des Behälters wird der Boden durch den darunter angeordneten und im Auflaufrahmen geführten Laufschlitten direkt auf dem Auflaufrahmen gehalten, wodurch an jeder Stelle des Bewegungsablaufes ein Abheben des Wechselbehälters bzw. seines Bodens vom Auflaufrahmen verhindert wird. Die Neigung des Wechselbehälters ist damit durch die Neigung des Auflaufrahmens vorgegeben und kann sich nicht verändern, so daß die bei bekannten Systemen unvermeidbare Nachregulierung der Neigung des Auflaufrahmens entfällt und der zeitliche Ablauf des Aufladevorganges verkürzt wird.

Die Erfindung wird nachfolgend anhand von in den Zeichnungen dargestellten Ausführungsbeispielen näher erläutert. Hierin zeigen:

Fig. 1 eine perspektivische Ansicht einer Ausführungsform eines Wechselbehälters mit Einhängevorrichtung,

Fig. 2 eine Seitenansicht einer ersten Ausführungsform eines Fahrzeugs für die Beladung mit dem Wechselbehälter,

Fig. 3 eine Draufsicht auf das Fahrzeug gemäß Fig. 2,

Fig. 4 eine Explosionsdarstellung des hinteren Teils eines Fahrzeugs und eines Auflaufrahmens,

Fig. 5 eine Vorderansicht der Aufnahmevorrichtung gemäß Fig. 1,

Fig. 6 eine Seitenansicht der in Fig. 5 dargestellten Aufnahmevorrichtung und

Fig. 7 eine Ansicht des freien Endes des am Laufschlitten schwenkbar gelagerten Arms mit dem daran angebrachten Haken.

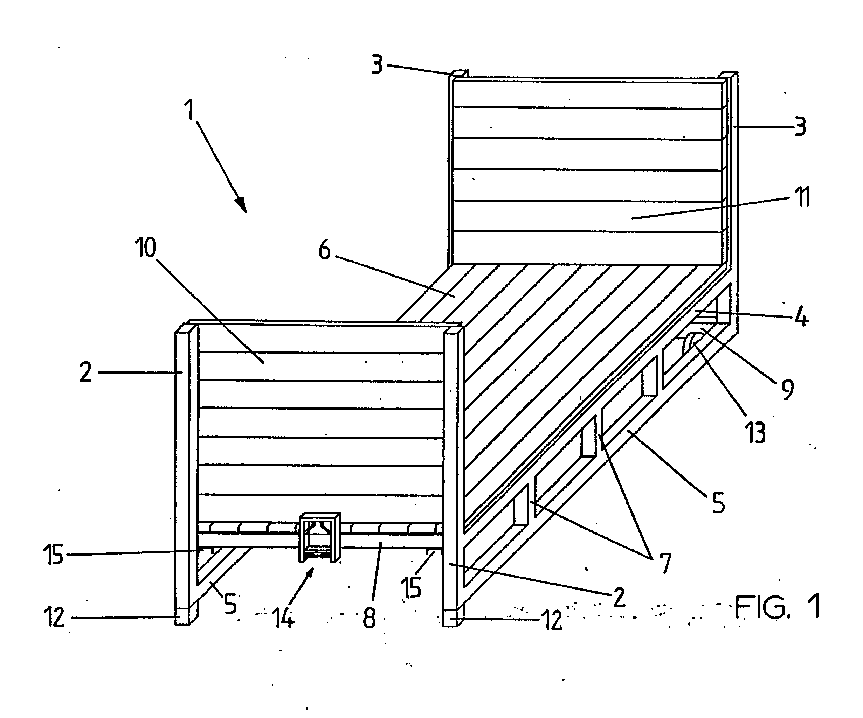

Der in Fig. 1 dargestellte Wechselbehälter 1 besteht aus einer in sich starren Rahmenkonstruktion, die an ihren Ecken zwei vordere Pfosten 2 und zwei hintere Pfosten 3 enthält, wobei die vorderen und hinteren Pfosten an jeder Seite durch zwei Längsholme 4 und 5 miteinander verbunden sind, von denen einer in Höhe des Bodens 6 und der zweite unterhalb des Bodens angeordnet und mit dem ersten Holm 4 durch Verbindungsstreben 7 verbunden ist. Die an den beiden Seiten des Behälters befindlichen Längsholme sind durch Querholme miteinander verbunden, von denen nur die Holme 8 und 9 sichtbar sind. Durch diese Rahmenkonstruktion kann der Behälter beliebig hinsichtlich der Wände umgerüstet werden. Bei dem dargestellten Ausführungsbeispiel ist an den Pfosten 2 eine Vorderwand 10 und an den Pfosten 3 eine Rückwand 11 angebracht. Die Wände 10, 11 und der Boden 6 bestehen dabei aus einzelnen Bohlen, die am Traggerüst befestigt sind. In gleicher Weise können auch nicht dargestellte Seitenwände an der Rahmenkonstruktion angebracht werden, so daß je nach Einsatzzweck die benötigte Anzahl von Wänden vom Benutzer selbst angebracht werden kann. Erforderlichenfalls können auch alle Wände abgenommen werden, so daß der Behälter nach Art einer Pritsche benutzbar ist. In diesem Fall kann es zweckmäßig sein, die Pfosten 2 und 3 in Höhe des Bodens 6 mit arretierbaren Klappscharnieren zu versehen, die ein Umklappen der Pfosten in eine horizontale Lage auf den Boden 6 zulassen, so daß sie nicht mehr im Wege sind.

Normalerweise ruht der Behälter auf den unteren Längsstreben 5. Dann können die Längsstreben 5 auf den Laufrollen des Fahrzeuges beim Aufziehen des Behälters auf das Fahrzeug geführt werden. Es können aber auch an den Pfosten 2 Standfüße 12 angebracht werden, wobei es zweckmäßig ist, am hinteren Ende der unteren Längsholme 5 je eine Rolle 13 anzubringen, so daß der hintere Teil des Behälters beim Aufladen auf dem Boden rollt und nicht schleift. Wenn Standfüße vorgesehen sind, ist es zweckmäßig, die Laufrollen 22 am Fahrzeug so anzubringen, daß die Unterseite des Bodens auf ihnen geführt wird. Zu diesem Zweck können an der Unterseite des Bodens 6 Schienen 15 vorgesehen werden.

Die Längsholmpaare 4 und 5 haben einen solchen seitlichen Abstand voneinander, daß die durch sie unterhalb des Bodens 6 gebildeten Verlängerungen die Fahrzeugbereifung übergreifen, wenn der Behälter sich auf dem Fahrzeug befindet, so daß die volle zulässige Fahrzeugbreite für den Behälter ausnutzbar ist.

Es ist ersichtlich, daß mit der dargestellten Behälterkonstruktion der Kippwinkel erheblich geringer als bei bekannten Konstruktionen gehalten werden kann, weil nur noch die Höhendifferenz zwischen dem Behälterboden und dem Auflaufrahmen überwunden werden muß.

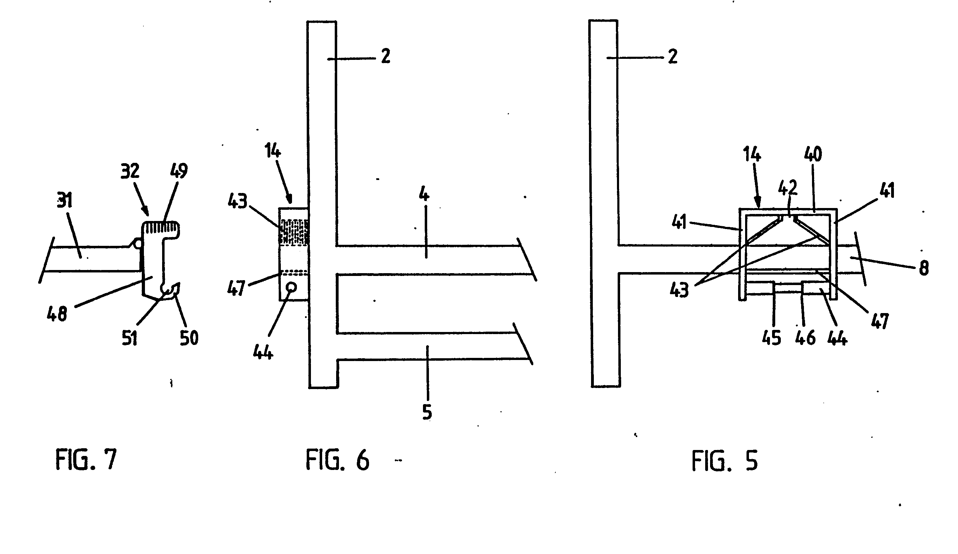

Dadurch, daß der Boden 6 auf einem höheren Niveau als sonst üblich liegt, kann eine Aufnahmevorrichtung 14 in der Mitte am vorderen Querholm angebracht und als Fangvorrichtung für einen Haken ausgebildet werden. Dies wird noch anhand von Fig. 5 und 6 weiter unten näher erläutert.

Bei dem dargestellten Ausführungsbeispiel werden der Boden 6 und die Wände 10 und 11 durch Bohlen gebildet, die je nach Verwendungszweck des Behälters aus Eisen, Leichtmetall oder auch aus Holz bestehen können.

Stattdessen können Boden und Wände auch aus durchgehenden Platten bestehen. Dabei ist es auch möglich, in Verbindung mit den oben erwähnten Klappscharnieren an den Stützen 2 und 3 die gesamte Vorder- und Rückwand einklappbar auszubilden, so daß der Behälter leicht stapelbar ist. Schließlich ist auch die Anordnung einer Deckenplatte bzw. einer Abdeckplane am oberen Ende des Behälters möglich, so daß ein allseits geschlossener Container gebildet wird.

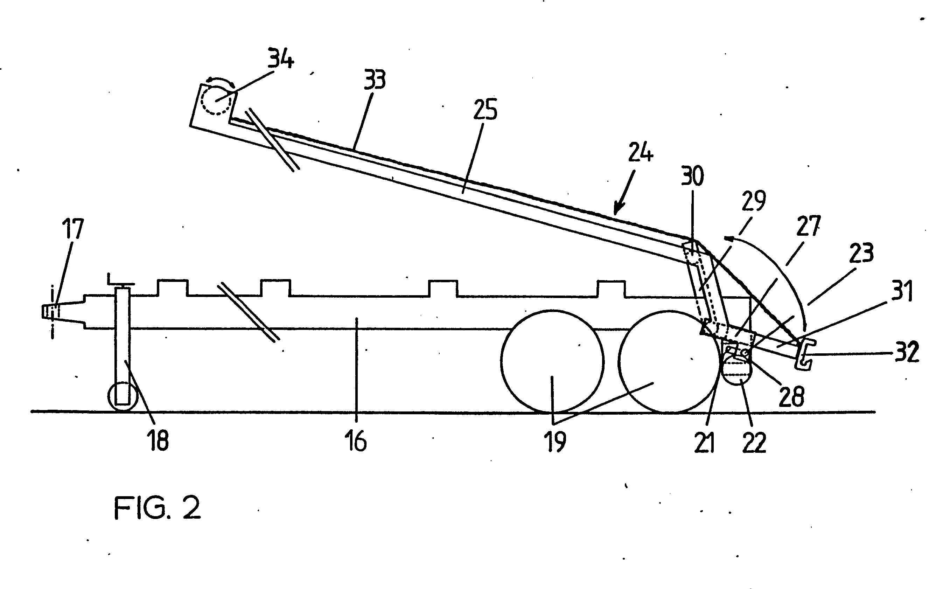

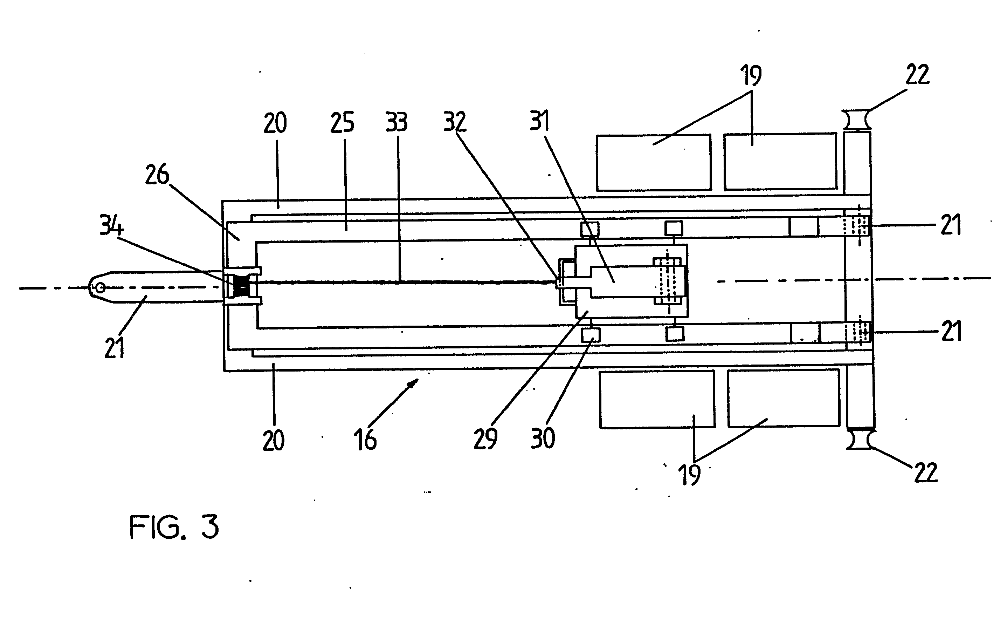

In Fig. 2 und 3 ist eine Ausführungsform eines Fahrzeuges zum Auf- und Abladen des erfindungsgemäßen Wechselbehälters dargestellt. Das Fahrzeug besteht bei diesem Ausführungsbeispiel aus einem Anhänger, der einen im wesentlichen rechtwinkligen Chassisrahmen 16 aufweist und an seiner Vorderseite mittig mit einer Deichsel 17 versehen ist, die mit einem Zugfahrzeug kuppelbar ist. Natürlich kann der Chassisrahmen 16 auch Teil eines Zugfahrzeuges sein.

Der Chassisrahmen 16 stützt sich vorn auf dem Boden über einen Standfuß 18 und hinten über Zwillingsreifen 19 ab. An seinen Seiten besitzt der Chassisrahmen 16 Längsträger 20, die am hinteren Ende des Chassisrahmens nach unten rechtwinklig abgewinkelt und mit einem schräg nach oben geneigten Langloch 21 versehen sind. Unterhalb des Langloches 21 ist an jedem der beiden Längsträger 20 eine Laufrolle 22 derart befestigt, daß der Abstand der beiden Laufrollen 22 größer ist als der Außenabstand der Zwillingsreifen 19.

Mit dem Chassisrahmen 16 ist über eine in den Langlöchern 21 geführte Schwenkachse 23 ein Auflaufrahmen 24 schwenkbar verbunden. Der Auflaufrahmen ist U-förmig ausgebildet, wobei die Schenkel zwei Längsträger 25 und die Basis einen Querträger 26 bilden. An ihren hinteren Enden sind die Längsträger 25 des Auflaufrahmens 24 schräg nach unten abgewinkelt und daran anschließend mit einer rechtwinkligen Lasche 27 versehen, die ihrerseits eine Bohrung 28 zur Aufnahme der Schwenkachse 23 aufweist.

Zwischen den beiden Längsträgern 25 des Auflaufrahmens 24 ist ein zweiachsiger Laufschlitten 29 verschiebbar geführt, wobei die Räder 30 des Laufschlittens 29 in den Längsträgern 25 laufen. Der Laufschlitten 29 ist an seinem der Schwenkachse 23 zugewandten Ende mit einem Arm 31 versehen, der aus einer Stellung, in der er auf dem Laufschlitten 29 aufliegt (Fig. 3) derart ausschwenkbar ist, daß er bei Anordnung des Laufschlittens im abgewinkelten Endbereich in Höhe der Aufnahmevorrichtung 14 eines auf dem Boden stehenden Wechselbehälters liegt. Am Ende des Armes 31 ist ein Haken 32 angebracht, der das fahrzeugseitige Kupplungselement für die Aufnahmevorrichtung 14 am Behälter 1 bildet.

Am Haken 32 greift ein als Zugelement dienendes Stahlseil 33 an, das mit der Seiltrommel 34 der Aufwickelvorrichtung verbunden ist. Im Vergleich mit bekannten Systemen ergibt sich durch die Verwendung des Laufschlittens der Vorteil, daß nur ein Zugseil verwendet zu werden braucht.

Wenn nun der erfindungsgemäße Wechselbehälter auf das Fahrzeug aufgeladen werden soll, wird das Fahrzeug, das - wie erwähnt - neben der in Fig. 2 und 3 dargestellten Ausführungsform als Anhänger auch ein mit Fahrerkabine, Vorderachse und Motor ausgerüsteter Lastkraftwagen sein kann, zunächst rückwärts vor den Wechselbehälter gefahren, und der Auflaufrahmen 24 wird vom Chassisrahmen 16 aufwärts geschwenkt. Als Schwenkmechanismus kann beispielsweise in bekannter Weise ein nicht dargestellter, zwischen dem Auflaufrahmen 24 und dem Chassisrahmen 16 angeordneter Hydraulikkolben dienen. Gleichzeitig mit dem Hochschwenken des Auflaufrahmens wird die Seiltrommel 34 entriegelt, so daß der Laufschlitten 29 nach dem Schwerkraftprinzip durch sein Eigengewicht angetrieben aus seiner Ausgangsstellung nahe dem Querträger 26 bis in den abgewinkelten Endbereich der Längsträger 25 gleitet. Die Länge dieser Endbereiches entspricht dabei zweckmäßigerweise dem Mittenabstand der beiden Laufschlittenachsen, wodurch erreicht wird, daß der Laufschlitten mit seinen der Seiltrommel zugewandten Rädern 30 nicht in den abgewinkelten Bereich gelangen kann und damit nach Art eines Anschlages in der in Fig. 2 gezeigten Endstellung selbständig festgelegt wird. Durch die Entriegelung der Seiltrommel wird das mit dem Laufschlitten über dessen Arm 31 verbundene Stahlseil 33 bei der Bewegung des Laufschlittens 29 von der Seiltrommel abgewickelt. Hat der Laufschlitten seine Endposition erreicht, schwenkt auch der Arm 31 von seiner in Fig. 3 dargestellten Ruhelage in die in Fig. 2 dargestellte Betriebslage aus. In dieser Lage entspricht die Höhe des Hakens 32 der Höhe der am Wechselbehälter installierten Aufnahmevorrichtung 14.

Um nun ein vollautomatisches Einkuppeln des Hakens 32 in die Aufnahmevorrichtung 14 zu erreichen, wird das Fahrzeug mit dem in die untere Position bewegten Laufschlitten an den Wechselbehälter 1 herangefahren, bis die Kupplung erfolgt ist. Anschließend wird die Seiltrommel 34 betätigt, wodurch das Stahlseil 33 angezogen wird und den mit dem Stahlseil verbundenen Arm 31 des Laufschlittens 29 in seine Ausgangslage zurück auf den Laufschlitten schwenkt, wobei der Haken 32 des Arms 31 auf dem der Seiltrommel zugewandten Ende des Laufschlittens zur Auflage kommt. Zugleich wird durch diese Schwenkbewegung der über die Aufnahmevorrichtung 14 mit dem Arm 31 fest verbundene Behälter 1 an seinem stirnwandseitigen Ende angehoben und auf das Fahrzeug gezogen. Dabei kommen die Unterkanten der unteren Längsholme 5 auf den Laufrollen 22 zur Auflage. Wird nun das Stahlseil 33 weiter auf die Seiltrommel 34 aufgewickelt, bewegt sich der Laufschlitten 29 aus dem abgewinkelten Endbereich der beiden Längsträger 25 zurück in den geradlinigen Bereich. Dabei wird der Wechselbehälter gleichzeitig weiter auf den Auflaufrahmen 24 gezogen und der Laufschlitten 29 legt sich direkt unter den Boden 6 des Wechselbehälters 1. Während des Aufziehens des Wechselbehälters durch den Laufschlitten werden die Unterkanten der Längsholme 5 auf den Laufrollen 22 geführt. Ist der Aufladevorgang beendet, d. h. der Laufschlitten befindet sich wieder in seiner Ausgangsstellung vor dem Querträger 26, kann der Auflaufrahmen auf den Chassisrahmen 16 abgesenkt werden, wobei die beiden die Fahrzeugbereifung 19 übergreifenden Verlängerungen des Tragrahmens die Absenkbewegung des Auflaufrahmens nicht behindern.

Durch die Führung der Schwenkachse 23 in den beiden Langlöchern 21 wird erreicht, daß der gesamte Auflaufrahmen 24 auf dem Chassisrahmen 16 seitlich gegenüber der Fahrzeuglängsachse verschwenkbar ist. Dadurch kann auch ein Wechselbehälter, der nicht genau in Verlängerung der Fahrzeuglängsachse steht, noch problemlos auf den Auflaufrahmen aufgezogen werden. Dabei verschwenkt zunächst der Auflaufrahmen in die Wechselbehälter-Längsrichtung und nimmt erst nach Abheben des Behälters vom Boden durch eine Ausgleichsbewegung in den Langlöchern 21 wieder seine parallel zur Fahrzeuglängsachse ausgerichtete Lage ein.

Die Laufrollen 22 können anstatt der Anordnung an den beiden Längsträgern des Chassisrahmens auch in nicht dargestellter Weise an den beiden Längsträgern 25 des Auflaufrahmens 24 an deren Übergang zu ihrem abgewinkelten Endbereich befestigt werden, wobei dann nicht die unteren Längsholme 5, sondern die Unterkante des Bodens 6 beim Aufladevorgang über die Laufrollen geführt wird.

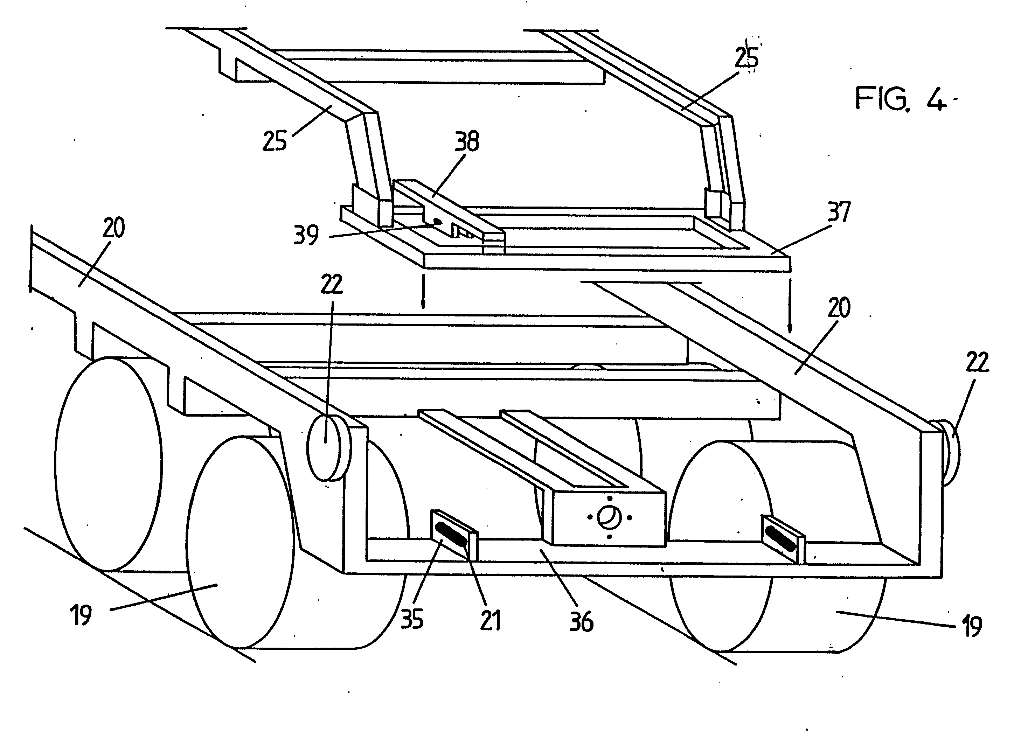

In Fig. 4 ist eine Explosionsdarstellung einer zweiten Ausführungsform des hinteren Endes des Fahrzeugs und des Auflaufrahmens dargestellt. Die Funktionsweise im Betrieb erfolgt dabei in gleicher Weise wie bei dem anhand von Fig. 1 bis 3 beschriebenen Ausführungsbeispiel. Gleiche und funktionsmäßig gleiche Teile dieser zweiten Ausführungsform sind dabei mit gleichen Bezugsziffern wie in Fig. 2 und 3 versehen.

Die Längsträger 20 des Chassisrahmens 16 befinden sich oberhalb der Fahrzeugbereifung und sind am Fahrzeugheck vertikal nach unten abgewinkelt. Der Auflaufrahmen befindet sich in abgesenkter Position innerhalb des Chassisrahmens, so daß eine ebene, aus dem Chassisrahmen 16 und dem Auflaufrahmen 26 gebildete Oberfläche vorhanden ist. Die Laufrollen 22 sind am Übergang der Längsträger 20 des Chassisrahmens 16 in ihren abgewinkelten Bereich angeordnet, und der Auflaufrahmen 24 ist wiederum um eine in zwei schräg nach oben weisenden Langlöchern 21 geführte Schwenkachse 23 schwenkbar. Dabei sind die beiden Langlöcher 21 in Flacheisen 35 angebracht, die senkrecht auf einem zwischen den beiden Längsträgern 20 des Chassisrahmens angeordneten Querträger 36 montiert sind. Auf diesem Querträger 36 liegt der Auflaufrahmen mit einem an dessen Längsträger 25 anschließenden Rahmen 37 auf. Dieser Rahmen ist mit zwei Flacheisen 38 verbunden, die die Flacheisen 35 auf dem Querträger 36 übergreifen und eine Bohrung 39 aufweisen, durch die ein nicht dargestellter Bolzen als Schwenkachse 23 in die Langlöcher 21 einführbar ist.

Im Betrieb dieser Ausführungsform wird der Behälter mit der Unterseite seines Bodens auf die beiden Laufrollen 22 gehoben, deren gegenseitiger Abstand dem Innenabstand der Längsholme 4, 5 des Wechselbehälters 1 entspricht. Dadurch wird in vorteilhafter Weise erreicht, daß während des Aufladens des Behälters die Längsholme eng an den Laufrollen anliegen und ein seitliches Verschwenken des Wechselbehälters weitgehend ausgeschlossen ist.

In Fig. 5 und 6 ist eine Detailansicht der Aufnahmevorrichtung 14 dargestellt. Die Aufnahmevorrichtung besteht im wesentlichen aus einem U-förmigen Rahmenprofil, das aus einer Basisplatte 40 und zwei seitlichen Schenkelplatten 41 gebildet wird. Das Rahmenprofil ist mittig zwischen den beiden Pfosten 2 am Querholm 6 in geeigneter Weise befestigt, z. B. verschweißt. An der Basisplatte 40 sind innen zwei Bleche 43 derart angeordnet, daß sich aus den Blechen 43 eine dachförmige Konstruktion mit einem Zwischenraum 42 am First ergibt. Zwischen den freien Enden der beiden Schenkelplatten 41 ist horizontal eine Achse 44 befestigt, deren Außendurchmesser im mittleren Bereich unter Bildung zweier Schultern 45 und 46 verringert ist. Zwischen der dachförmigen Konstruktion und der Achse 44 ist ferner noch parallel zur Achse 44 ein weiteres Flacheisen 47 befestigt.

Fig. 7 zeigt eine Detailansicht des am Ende des Arms 31 angebrachten Hakens 32. Der Haken ist annähernd U-förmig ausgebildet und besteht ebenfalls aus einem Flacheisen. Die Basis 46 des Hakens verläuft quer zum Arm 31. Der obere Schenkel 49 verläuft gerade, während der untere Schenkel 50 eine runde Öse 51 bildet, deren Innendurchmesser dem Durchmesser des mittleren Teils der Achse 44 entspricht.

Beim Kupplungsvorgang erfaßt die Öse 51 den mittleren Teil der Achse 44, wobei der Schenkel 49 unmittelbar unterhalb des Zwischenraums 42 zu liegen kommt. Die beiden Bleche 43 sorgen dafür, daß der Haken 32 auch wirklich mit der Mitte der Achse 44 in Eingriff kommt. Wird nun das Zugelement eingefahren, schwenkt der Arm 31 - wie oben beschrieben - auf den Laufschlitten 29 herum, wobei sich der Haken 32 auf der Achse 44 um etwa 180° dreht. Mit der Schwenkung des Arms 31 wird zugleich der Behälter 1 angehoben und anschließend bei weiterem Einfahren des Zugelements auf den Auflaufrahmen hochgezogen. Beim Schwenkvorgang arretiert das Flacheisen 47 den Haken 32.

**Patentansprüche**

1. Wechselbehälter-Transport-System, bestehend aus einem Fahrzeug, an dessen hinteren Ende ein Auflaufrahmen um eine quer zur Fahrzeuglängsachse verlaufende Achse schwenkbar so gelagert ist, daß der Auflaufrahmen aus einer auf der Ladefläche aufliegenden Position in eine Schräglage ausschwenkbar ist, und aus einem Wechselbehälter, der auf den ausgeschwenkten Auflaufrahmen über zwei am Fahrzeug angebrachte Laufrollen mittels einer Zugvorrichtung aufziehbar ist, nachdem deren Zugelement mit einer Aufnahmevorrichtung am Wechselbehälter verbunden worden ist, dadurch gekennzeichnet, daß der Wechselbehälter (1) aus einer in sich stabilen Rahmenkonstruktion (2, 3, 4, 5, 7, 8, 9) besteht, die als Traggerüst für Boden (6) und Wände (10, 11) dient, und die an den Seiten des Bodens (6) über diesen hinaus nach unten verlängert ist, wobei der seitliche Abstand der Verlängerungen so gewählt ist, daß diese bei auf dem abwärts geschwenkten Auflaufrahmen (24) befindlichen Wechselbehälter (1) die Fahrzeugbereifung (19) übergreifen, daß die Aufnahmevorrichtung (14) am Wechselbehälter (1) stirnseitig im Bereich von dessen Mittellängsebene angeordnet und als das eine Element einer Kupplung ausgebildet ist, und daß das andere, mit dem Zugelement (33) verbundene Kupplungselement (32) im Auflaufrahmen (24) in Richtung von dessen Längsachse verschieblich geführt ist.

2. System nach Anspruch 1, dadurch gekennzeichnet, daß die Rahmenkonstruktion an ihren Ecken zwei vordere Pfosten (2) und zwei hintere Pfosten (3) enthält, daß die vorderen und die hinteren Pfosten an jeder Seite durch zwei Längsholme (4, 5) miteinander verbunden sind, von denen einer (4) in Höhe des Bodens (6) und der zweite (5) unterhalb des Bodens angeordnet und mit dem ersten Holm (4) durch Verbindungsstreben (7) verbunden ist, und daß die Längsholme (4, 5) durch Querholme (8, 9) miteinander verbunden sind.

3. System nach Anspruch 2, dadurch gekennzeichnet, daß an der Rahmenkonstruktion der Boden (6) und wenigstens die Vorderwand (10) und die Rückwand (11) befestigt sind.

4. System nach Anspruch 3, dadurch gekennzeichnet, daß der Boden (6) und die Wände (10, 11) aus einzelnen Bohlen zusammengesetzt sind, die an der Tragkonstruktion befestigt sind.

5. System nach Anspruch 4, dadurch gekennzeichnet, daß die vorderen Pfosten (2) über die unteren Längsholme (5) hinaus zu Standfüßen (12) verlängert sind.

6. System nach Anspruch 5, dadurch gekennzeichnet, daß am hinteren Ende der unteren Längsholme (5) je eine Rolle (13) angebracht ist.

7. System nach einem der vorhergehenden Ansprüche, dadurch gekennzeichnet, daß die Pfosten (2, 3) oberhalb des Bodens (6) mit arretierbaren Klappscharnieren versehen sind, die ein Umklappen der Pfosten in eine horizontale Lage auf dem Boden (6) zulassen.

8. System nach einem der vorhergehenden Ansprüche, dadurch gekennzeichnet, daß die Aufnahmevorrichtung (14) in der Mitte am vorderen Querholm (8) angebracht ist und als Fangvorrichtung für einen Haken (32) ausgebildet ist.

9. System nach einem der vorhergehenden Ansprüche, dadurch gekennzeichnet, daß die Aufnahmevorrichtung (14) ein U-förmiges Rahmenprofil (40, 41) enthält, das aus einer Basisplatte (40) und zwei Schenkelplatten (41) gebildet wird, wobei innen an der Basisplatte und den beiden Schenkelplatten (41) zwei Bleche (43) derart angeordnet sind, daß sich aus den Blechen (43) eine dachförmige Konstruktion mit einem Zwischenraum (42) am First ergibt, und daß zwischen den beiden freien Enden der Schenkelplatten (41) horizontal eine Welle (44) befestigt ist, deren Außendurchmesser im mittleren Bereich unter Bildung zweier Schultern (45, 46) verringert ist, und daß zwischen der dachförmigen Konstruktion und der Welle (44) parallel zu dieser ein weiteres Flacheisen (47) angeordnet ist.

10. System nach einem der vorhergehenden Ansprüche, dadurch gekennzeichnet, daß der Haken (32) das fahrzeugseitige Kupplungselement darstellt, daß der Haken (32) an einem Arm (31) sitzt, der um eine horizontale Achse schwenkbar am hinteren Ende eines Laufschlittens (29) gelagert ist, der in den Längsträgern (25) des Auflaufrahmens (21) verschieblich geführt ist, und daß das Ende des Zugelements (33) am Haken (32) befestigt ist.

11. System nach Anspruch 10, dadurch gekennzeichnet, daß der Laufschlitten (29) zweiachsig ausgebildet ist, daß die Längsträger (25) des Auflaufrahmens (24) an ihrem hinteren Ende schräg nach unten abgewinkelt sind, daß die Länge des abgewinkelten Endbereiches kleiner als der Achsabstand des Laufschlittens (29) ist und daß der Arm (31) aus einer Ruhestellung, in der er auf dem Laufschlitten (28) aufliegt, in eine Betriebsstellung ausschwenkbar ist, in der der Haken (32) bei Anordnung des Laufschlittens (29) im abgewinkelten Endbereich der Längsträger (25) in Höhe der Aufnahmevorrichtung (14) eines auf dem Boden stehenden Wechselbehälters (1) liegt.

12. System nach einem der vorhergehenden Ansprüche, dadurch gekennzeichnet, daß das Zugelement (33) ein Stahlseil oder eine Kette ist und die Zugvorrichtung (34) mittig am freien Ende des Auflaufrahmens (24) angeordnet ist.

13. System nach einem der vorhergehenden Ansprüche, dadurch gekennzeichnet, daß die Schwenkachse (23) des Auflaufrahmens (24) in zwei Langlöchern (21) geführt ist.

14. System nach Anspruch 13, dadurch gekennzeichnet, daß der Auflaufrahmen (24) im abgesenkten Zustand etwa niveaugleich mit den beiden Längsträgern (20) des Chassisrahmens (16) ist und auch die Längsträger des Chassisrahmens an ihrem hinteren Ende entsprechend den Längsträgern des Auflaufrahmens schräg nach unten abgewinkelt sind.

15. System nach Anspruch 14, dadurch gekennzeichnet, daß die beiden seitlichen Laufrollen (22) an den Längsträgern (20) des Chassisrahmens (16) an deren Übergang in das abgewinkelte Ende oberhalb der Schwenkachse (23) des Auflaufrahmens (24) angeordnet sind:

16. System nach Anspruch 14, dadurch gekennzeichnet, daß die beiden seitlichen Laufrollen (22) an den Längsträgern (25) des Auflaufrahmens (24) an deren Übergang in das abgewinkelte Ende oberhalb der Schwenkachse (23) des Auflaufrahmens (24) angeordnet sind.

17. System nach einem der Ansprüche 1 bis 4 oder 7 bis 13, dadurch gekennzeichnet, daß die beiden seitlichen Laufrollen (22) am Chassisrahmen (16) dicht unterhalb der Langlöcher (21) für die Schwenkachse (23) des Auflaufrahmens (24) angeordnet sind und ihr Abstand dem Abstand der Längsholme (4, 5) des Wechselbehälters (1) entspricht.

## Claims

1. Exchangeable container conveying system consisting of a vehicle, at the rear end of which a pick-up frame is mounted so that it can be slewed about an axis running at right-angles to the longitudinal axis of the vehicle in such a way that it can be swung out into an oblique position from a position situated on the loading surface and of an exchangeable container, which can be hoisted onto the swung out pick-up frame via two rollers fitted to the vehicle by means of a drawing device, after the drawing component of which has been connected to a take-up device on the exchangeable container, characterised in that the exchangeable container (1) consists of a frame construction (2, 3, 4, 5, 7, 8, 9) which is stable in itself and which serves as a supporting framework for the base (6) and the walls (10, 11) and which at the sides of the base (6) extends downwards beyond the base, whereby the lateral distance between the extensions is chosen in such a way that they overlap with the vehicle tyres when the exchangeable container (1) is situated on the pick-up frame (24) which has been pivoted downwards, that the take-up device (14) on the exchangeable container (1) is arranged at the front in the area of its middle longitudinal plane and is constructed as one component of a coupling and that the other coupling component (32) in the pick-up frame (24) connected to the drawing component (33) is arranged so that it can be displaced in the direction of the longitudinal axis of the pick-up frame (24).

2. System according to claim 1, characterised in that the frame construction is provided at its corners with two front posts (2) and two rear posts (3), that the front and rear posts are connected to each other on each side by two longitudinal members (4, 5) one of which (4) is arranged at the height of the base (6) and the second (5) below the base and is connected to the first member (4) by connection struts (7) and that the longitudinal members (4, 5) are connected to each other by cross members (8, 9).

3. System according to claim 2, characterised in that the base (6) and at least the front wall (10) and the rear wall (11) are attached to the frame construction.

4. System according to claim 3, characterised in that the base (6) and the walls (10, 11) are composed of individual boards, which are attached to the bearing structure.

5. System according to claim 4, characterised in that the front posts (2) are extended beyond the lower longitudinal members (5) to form feet (12).

6. System according to claim 5, characterised in that one roller (13) in each case is fitted at the rear end of the lower longitudinal members (5).

7. System according to one of the previous claims, characterised in that the posts (2, 3) are provided above the base (6) with lockable folding hinges which enable the posts to be folded down into a horizontal position on the base (6).

8. System according to one of the previous claims, characterised in that the take-up device (14) is fitted to the front cross member (8) in the middle and is constructed as a gripping device for a hook (32).

9. System according to one of the previous claims, characterised in that the take-up device (14) contains a U-shaped frame section (40, 41) which is formed from a basic plate (40) and two leg plates (41) whereby two plates (43) are arranged in such a way on the inside on the basic plate and the two leg plates (41) that a roof-shaped structure with an intermediate space (42) at the roof sections formed by the 2 plates (43) and that a shaft (44) is attached horizontally between the two free ends of the leg plates (41), the outside diameter of this shaft being reduced in the middle section with the formation of two shoulders (45, 46) and that a further flat bar (47) is arranged parallel to the shaft between it and the roof-shaped structure.

10. System according to one of the previous claims, characterised in that the hook (32) forms the coupling component on the vehicle side, that the hook (32) is located on an arm (31) which is mounted at the rear end of a sliding carriage (29) so that it can be swivelled about a horizontal axis, the sliding carriage being arranged so that it can be displaced in the longitudinal members (25) of the pick-up frame (21) and that the end of the drawing component (33) is attached to the hook (32).

11. System according to claim 10, characterised in that the sliding carriage (29) is constructed in a biaxial arrangement, that the longitudinal members (25) of the pick-up frame (24) are bent downwards obliquely at their rear end, that the length of the bent end area is smaller than the distance between axes of the sliding carriage (29) and that the arm (31) can be swung out of a rest position in which it is located on the sliding carriage (28) into an operating position, in which the hook (32) is located at the height of the take up device (14) of an exchangeable container (1) situated on the ground when the sliding carriage (29) is arranged in the bent end area of the longitudinal members (25).

12. System according to one of the previous claims, characterised in that the drawing component (33) consists of a steel rope or a chain and the drawing device (34) is arranged centrally at the free end of the pick-up frame (24).

13. System according to one of the previous claims, characterised in that the swivel shaft (23) of the pick-up frame (24) is run in two longitudinal holes (21).

14. System according to claim 13, characterised in that the pick-up frame (24) in the lowered condition is approximately at the same level as the two longitudinal members (20) of the chassis frame (16) and the longitudinal members of the chassis frame are also bent downwards obliquely at their rear end in a corresponding fashion to the longitudinal members of the pick-up frame.

15. System according to claim 14, characterised in that the two lateral rollers (22) on the longitudinal members (20) of the chassis frame (16) are arranged above the swivel shaft (23) of the pick-up frame (24) at their transition into the bent end.

16. System according to claim 14, characterised in that the two lateral rollers (22) on the longitudinal members (25) of the pick-up, frame (24) are arranged above the - swivel shaft (23) of the pick-up frame (24) at their transition into the bent end.

17. System according to one of claims 1 to 4 or 7 to 13, characterised in that the two lateral rollers (22) are located at the chassis frame (16) immediately below the longitudinal holes (21) for the swivel shaft (23) of the pick-up frame (24) and the distance between them corresponds to the distance between the longitudinal members (4, 5) of the exchangeable container (1).

**Revendications**

1. Système de transport à conteneur interchangeable, consistant en un véhicule, sur l'extrémité arrière duquel est disposé un cadre de rampe pivotant autour d'un axe transversal par rapport à l'axe longitudinal du véhicule, de façon que le cadre de rampe puisse pivoter d'une position appliquée contre la plate-forme de chargement jusqu'à une position inclinée et en un conteneur interchangeable qui peut être monté sur le cadre de rampe incliné en le faisant passer sur deux galets fixés au véhicule, au moyen d'un dispositif de traction dont l'élément de traction a été relié à un dispositif d'accrochage du conteneur interchangeable, caractérisé en ce que le conteneur interchangeable (1) consiste en une structure en cadre stable en elle-même (2, 3, 4, 5, 7, 8, 9) servant de charpente de support au fond (6) et aux parois (10, 11) et étant, des deux côtés du fond (6) prolongée vers le bas de façon à descendre sous le fond (6), la distance latérale de ces prolongements ayant été choisie de façon que ces derniers, dans le cas où un conteneur interchangeable (1) se trouve sur le cadre de rampe (24) abaissé, mordent sur les pneus du véhicule, en ce que le dispositif d'accrochage (14) du conteneur interchangeable (1) est fixé sur son côté avant, au niveau du plan médian longitudinal de ce dernier et qu'il forme l'un des deux éléments d'un attelage, et en ce que l'autre élément de cet attelage (32), relié à l'élément de traction (33), coulisse dans le cadre de rampe (24), dans la direction de son axe longitudinal.

2. Système suivant la revendication 1, caractérisé en ce que la structure en cadre comporte à ses angles, deux montants avant (2) et deux montants arrière (3), en ce que ces montants avant et arrière sont reliés entre eux par deux barres longitudinales (4, 5) dont l'une (4) se trouve au niveau du fond (6) et l'autre (5) sous le fond, tout en étant liée à la première barre longitudinale (4) par des entretoises (7) et en ce que les barres longitudinales (4, 5) sont reliées entre elles par des traverses (8, 9).

3. Système suivant la revendication 2, caractérisé en ce que le fond (6) et au moins la paroi avant (10) et celle arrière (11) sont fixées à la structure en cadre.

4. Système suivant la revendication 3, caractérisé en ce que le fond (6) et les parois (10, 11) sont composés de planches fixées à la structure du support.

5. Système suivant la revendication 4, caractérisé en ce que les montants avant (2) sont prolongés de façon à ce qu'ils descendent sous les barres longitudinales inférieures (5) et forment des pieds.

6. Système suivant la revendication 5, caractérisé en ce que les extrémités arrière des barres longitudinales inférieures (5) sont munies chacune d'un rouleau (13).

7. Système suivant l'une quelconque des revendications précédentes, caractérisé en ce que les montants (2, 3) sont, au-dessus du fond (6), munis de charnières rabattables pouvant être verrouillées et permettant de rabattre les montants afin de leur faire prendre une position horizontale sur le fond (6).

8. Système suivant l'une quelconque des revendications précédentes caractérisé en ce que le dispositif d'accrochage (14) est fixé au milieu de la traverse avant (18) et est réalisé sous forme d'un dispositif d'arrêt destiné à recevoir un crochet (32).

9. Système suivant l'une quelconque des revendications précédentes, caractérisé en ce que le dispositif d'accrochage (14) comporte un profil de cadre en U consistant en une plaque de base (40) et deux plaques latérales (41, 42), à l'intérieur desquelles, deux tôles (43) sont fixées à la plaque de base et aux deux plaques latérales (41, 42) de façon que les deux tôles (43) forment une structure en toit avec un espace intermédiaire (42) au niveau du faîte et en ce qu'entre les deux extrémités libres des plaques latérales (4) est fixé, en position horizontale, un arbre (44) dont le diamètre extérieur se trouve, dans sa partie médiane, réduit par la formation de deux épaulements (45, 46) et qu'entre la structure en forme de toit et l'arbre (44) se trouve un autre fer plat (47) parallèle à ce dernier.

10. Système suivant l'une des revendications précédentes caractérisé en ce que le crochet (32) représente l'élément d'attelage du côté véhicule et que ce crochet (32) est monté sur un bras (31) qui est fixé pivotant autour d'un axe horizontal, à l'extrémité arrière d'un chariot mobile (29) guidé de manière mobile dans les longerons (25) du cadre de rampe et en ce que l'extrémité de l'élément de traction (33) est fixé au crochet (32).

11. Système suivant la revendication 10, caractérisé en ce que le chariot mobile (29) a deux axes, en ce que les longerons (25) du cadre de rampe (24) sont coudés vers le bas vers leurs extrémités arrière, en ce que la longueur de l'extrémité coudée est inférieure à l'empattement du chariot mobile (29) et en ce que le bras (31) peut pivoter d'une position de repos, où il est appliqué sur le chariot mobile (29) jusqu'à une position de marche, où, le chariot mobile (29) étant positionné au niveau de l'extrémité coudée des longerons (25), le crochet (32) se trouve à la hauteur du dispositif d'accrochage (14) d'un conteneur interchangeable (1) posé par terre.

12. Système suivant l'une quelconque des revendications précédentes, caractérisé en ce que l'élément de traction (33) est un câble en acier ou une chaîne et en ce que le dispositif de traction (34) est fixé au milieu de l'extrémité libre du cadre de rampe (24).

13. Système suivant l'une quelconque des revendications précédentes, caractérisé en ce que l'axe de pivotement (23) du cadre de rampe (24) passe dans deux trous oblongs (21).

14. Système suivant la revendication 13, caractérisé en ce que le cadre de rampe (24) se trouve, en position basse, à peu près au même niveau que les deux longerons (20) du cadre de châssis (16) et en ce que les longerons du cadre de châssis sont eux aussi coudés vers le bas au niveau de leur extrémité, la même façon que les longerons du cadre de rampe.

15. Système suivant la revendication 14, caractérisé en ce que deux galets latéraux (22) sont montés sur les longerons (20) du cadre de châssis (16) au niveau de leur transition vers l'extrémité coudée, au-dessus de l'axe de pivotement (23) du cadre de rampe (24).

16. Système suivant la revendication 14, caractérisé en ce que les deux galets latéraux (22) sont montés sur les longerons (20) du cadre de châssis (16) au niveau de leurs transitions vers l'extrémité coudée, au-dessus de l'axe de pivotement (23) du cadre de rampe (24).

17. Système suivant l'une des revendications 1 à 4 ou 7 à 13, caractérisé en ce que les deux galets latéraux (22) sont fixés au cadre de châssis (16) juste au-dessous des trous oblongs (21) de l'axe de pivotement (23) du cadre de rampe (24) et en ce que la distance entre eux correspond à la distance entre les barres longitudinales (4, 5) du conteneur interchangeable (1).

FIG. 1

FIG. 2

0 154 891

FIG. 3

FIG. 4

0 154 891

FIG. 7

FIG. 6

FIG. 5

0 154 891